# EUROPEAN PATENT APPLICATION

(11) **EP 2 207 345 A2**
(43) Date of publication of application: **14.07.2010**
(21) Application number: 09170755.4
(22) Date of filing: 18.09.2009
(51) Int. Cl.: H04N 5/335

(54) **An apparatus, method and system for reducing motion blur in an image capture device**

(30) Priority: 11.12.2008 US 332699
(71) Applicant: NCR Corporation, Dayton, Ohio 45479 (US)
(72) Inventor: Kwan, Sik Piu, Suwanee, GA 30024 (US)
(74) Representative: MacLeod, Roderick William

(57) **Abstract**

An image capture device (120), methods and system for reducing blurring or streaking of a captured image induced by the movement of an object past the image capture device (120). During the image capture cycle, intermediate light values in each pixel within the image capture device (120) are transferred to an adjacent pixels allowing the integration of the light values to follow the movement of the object being captured.

## Description

The invention relates generally to improvements to semiconductor based image capture devices. More particularly, the invention relates to improving the quality of an image by reducing motion blur associated with the movement of an object whose image is being captured by an image capture device.

Bar code scanners are used in a wide variety of applications that rely on information stored in bar codes. Industries such as retail, airline, self-service, automotive, parcel delivery, pharmaceutical, healthcare and others use bar codes to provide inventory control, customer identification, item tracking, security and many other functions. A typical bar code is comprised of a number of bars separated by spaces. Information is encoded on a bar code by varying the width of the bars and spaces. When a bar code is placed within the field of view of a bar code scanner, the scanner will detect, analyze and decode the bars and spaces comprising the bar code to retrieve the information encoded therein. This operation is also called scanning or reading a bar code. The information encoded on a bar code is usually a sequence of numeric or alphanumeric symbols (e.g., a Universal Product Code (UPC) or European Article Number (EAN)).

An imaging bar code scanner (also referred to as an image scanner) reads a bar code by capturing a digital image of the bar code and then processing the image to detect and decode the bar code. It is advantageous for the bar code scanner to successfully read all bar codes presented to the scanner on the first pass of each bar code by the scanner. This is known as a successful first pass read. Successful first pass reads of bar codes helps to maintain a good workflow at a checkout station and speeds up the overall checkout process. A high success rate for first pass reads has also been found to reduce stress on the person operating the scanner. This is particularly true if the operator is a customer operating a self-checkout terminal.

High performance passby barcode scanners based upon image capture and image processing technology have been slow to be adopted in passby scanning environments. In a retail environment, an image scanner must achieve an object passby speed of 30 to 50 inches per second. The image scanners on the market today have not proved capable of such speeds, which is one reason why laser based barcode scanners dominate the passby scanning environments.

One important barrier that has prevented image scanners from reaching such high passby speeds is the poor image quality of a bar code when the bar code is moving past the image scanner at high speeds. The poor quality can be attributed in part to motion blur. Motion blur occurs when an image of an object moves across multiple pixels of an image capture device during the period of time the image is being captured. The result is a captured image where the object in motion is blurred or has streaks thus making it difficult or in some cases impossible to properly identify the object in the captured image.

Therefore, it would be desirable to provide an image capture device that does not suffer from above deficiencies.

According to a first aspect of the invention there is provided a pixel in an image capture device, the pixel comprising: a photosensitive device that integrates a charge proportional to the number of photons striking the photosensitive device during an integration period; a transferring device that detects the instantaneous integrated charge in the photosensitive device during the integration period and transfers a signal of equal charge to a second pixel in response to a transfer control signal; and a receiving device that receives a signal from a third pixel and sets the instantaneous integrated charge in the photosensitive device to the level of the received signal.

According to a second aspect of the invention there is provided a method for integrating a charge in a pixel of an image capture device, the method comprising: setting the charge in a photosensitive device in the pixel to a reference voltage; integrating the charge over an integration period where the change in the charge voltage is proportional to the number of photons striking the photosensitive device during the integration period; transferring a value of the instantaneous integrated charge prior to the end of the integration period in response to a transfer control signal; and receiving an integrated charge value and setting the charge in the photosensitive device to the received integrated charge value and continuing the integration of the charge.

According to a third aspect of the invention there is provided a method of forming a pixel cell of an image capture device, the method comprising: forming a photosensitive device in the pixel cell that integrates a charge which is proportional to the number of photons striking the photosensitive device; forming at least one transistor in the pixel cell responsive to drive a first signal externally to an adjacent pixel in response to a transfer control signal where the first signal represents the instantaneous charge on the photosensitive device; and forming a device that receives a second signal from an adjacent pixel and sets the charge of the photosensitive device to the value of the second signal where the second signal represents the instantaneous charge on a photosensitive device in the adjacent pixel.

According to a fourth aspect of the invention there is provided an image scanning system for reading optical codes, the system comprising: an optical code image scanner comprising: an image capture device that captures an image of the optical code, the device comprising: an array of pixels that capture the image, a pixel of the array of pixels comprising: a photosensitive device that integrates a charge proportional to the number of photons striking the photosensitive device during an integration period; a transferring device that detects the instantaneous integrated charge in the photosensitive device during the integration period and transfers a signal of equal charge to a second pixel in response to a transfer control signal; and a receiving device that receives a signal from a third pixel and sets the instantaneous integrated charge in the photosensitive device to the level of the received signal.

The system optionally further comprises a point-of-sale computer in communication with the optical code image scanner.

The system optionally further comprises a store computer connected to the point-of-sale computer over a network.

These and other aspects of the invention will be apparent from the following detailed description, given by way of example, with reference to the accompanying drawings, in which:

FIG. 1 is a high level block diagram illustrative of an embodiment of an image scanning system;

FIG. 2 is a high level block diagram illustrative of an embodiment of a semiconductor image capture device;

FIG. 3A is a high level cross section diagram illustrative of a reversed biased photodiode;

FIG. 3B is a high level architectural schematic of a four transistor (4T) pixel (prior art);

FIG. 4A, 4B and 4C are high level diagrams depicting, at different points in time, the image of a bar code segment positioned over a group of pixels;

FIG. 5 is a high level architectural schematic of a four transistor pixel (4T) with a pixel to pixel charge transfer feature;

FIG. 6A, 6B and 6C are high level diagrams depicting, at different points in time, the image of a bar code segment positioned over a group of pixels where each pixel has a pixel to pixel charge transfer feature; and

FIG. 7 is a high level flow diagram illustrating the transfer of a partially integrated charge value from one pixel to an adjacent pixel.

In the following description, numerous details are set forth to provide an understanding of the claimed invention. However, it will be understood by those skilled in the art that the claimed invention may be practiced without these details and that numerous variations or modifications from the described embodiments are possible.

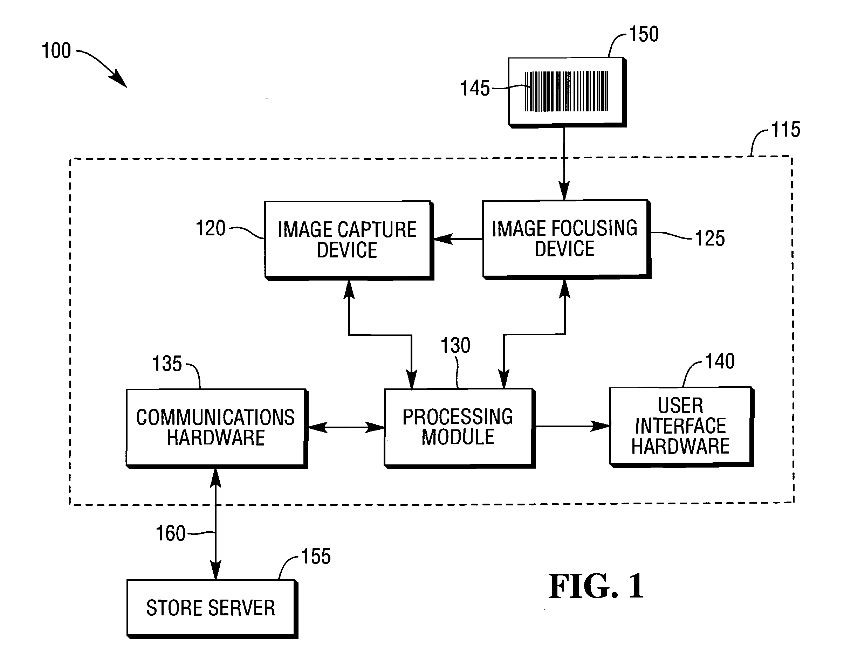

With reference to FIG. 1, there is provided a high level illustration, in block form, of an embodiment of an image scanning system 100, which is used to scan a bar code 145. The image scanning system 100 comprises an image scanner 115, a store server 155 and a bar code 145 printed on a label 150. The image scanner 115 communicates with the store server 155 over a computer data network 160. The network 160 can be a wired network (e.g., an Ethernet network) or wireless network (e.g., an IEEE 802.11 G based network) or a combination of both. In some embodiments, the store server 155 is physically removed from the store where the image scanner 115 is located and communicates with the image scanner 115 over the Internet or a wide area network or a combination of these or different types of networks. In some embodiments, multiple image scanners 115 communicate over the data network 160 to the store server 155.

The image scanner 115 includes an image-focusing device 125 that receives an image and focuses the image onto an image capture device 120. The image scanner 115 is further comprised of a processing module 130, user interface hardware 140, and communications hardware 135. The processing module 130 comprises at least one processor, memory, stored instructions and control and interface hardware to control the other devices and modules of the image scanner 115. The processing module 130, by executing the stored instructions, controls the hardware devices and modules that comprise the image scanner 115 or are connected to the image scanner 115. In addition, the stored instructions cause the processor to: process data such as an image that is captured by the image capture device 120, control the communications hardware 135 to implement protocols used on the data network 160 and implement other software features and functions of the image scanner 115. In some embodiments, the store server 155 sends the image scanner 115 updates to the stored instructions or to the operating parameters of the image scanner 115. These updated stored instructions are stored in the image scanner 115 and then executed as required.

Image capture device 120 converts light reflected from bar code 145 into electrical signals. The source of the reflected light may be ambient light or light from an illumination device if sufficient ambient light is unavailable. The image capture device 120 is a silicon-based device with both optical and integrated circuits and may be fabricated as a complimentary metal oxide semiconductor (CMOS) integrated circuit. Image capture device 120 may include a charge coupled device (CCD) or a CMOS device.

Image capture device 120 captures an optical image, focused on its surface, by converting the optical image to an electronic digital image comprising pixel information organized into rows and columns. The time required to read all of the raw pixel data from the image capture device 120 is relatively long compared to the time required to simply capture the digital image in the image capture device 120.

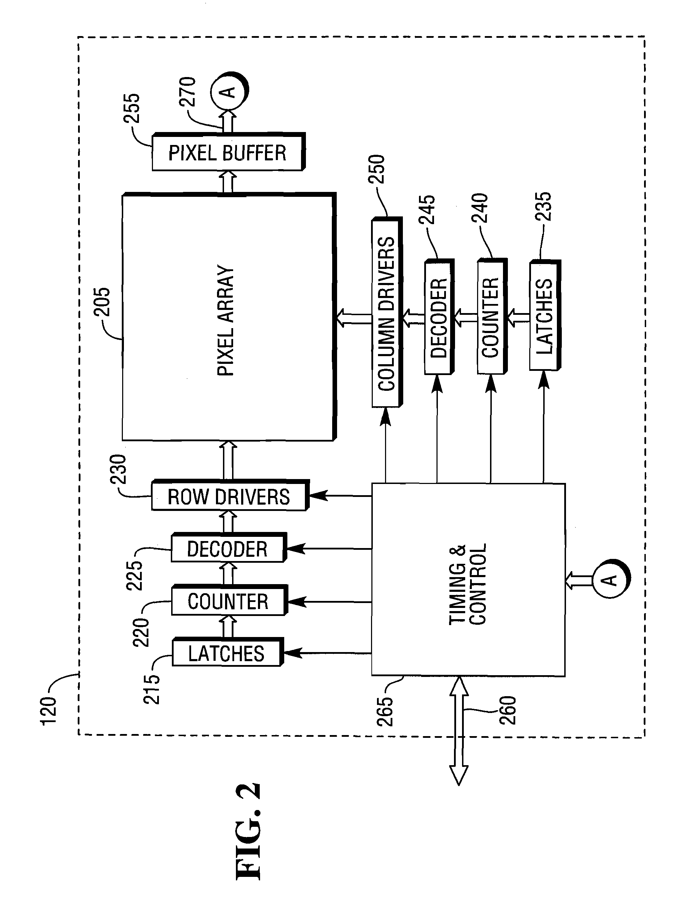

Turning to FIG. 2, there is provided a high level block diagram of an image capture device 120. In this embodiment, the image capture device 120 is implemented as a CMOS device. The pixel array 205 defines the optically active area of the image capture device 120 and is where light or photon energy is converted into electric energy and stored as individual pixel data. An individual pixel contains data wherein the magnitude of the data is proportional to the total amount of photon energy striking a given area of the pixel array 205 integrated over a period of time. The pixels are physically organized into rows and columns. Timing and control logic 265 controls the operations of the image capture device 120 including capturing an image and reading pixel data from the pixel array 205 that represent the captured image. External interface 260 provides access to and control of the timing and control logic 265 to external devices (i.e., a processor 130 or specialized hardware designed or programmed to process data from the image capture device 120). The external interface 260 is also used to receive commands from the external device and to send and receive data, including pixel data. Pixel data, captured by the image capture device 120, is transferred from the pixel array 205 to a pixel buffer 255 and then transferred externally through the external interface 260 when an external device signals it is ready to accept the data. The timing and control logic 265 controls the operation of the pixel buffer and movement of pixel data through an internal interface 270. The external interface 260 interfaces with a data/control bus (not shown) that is external to the image capture device 120. The timing and control logic 265 manages the interaction with the data/control bus and the external device or devices.

One approach to read pixel data from the image capture device 120 is to issue a read-out all pixel data command. This command causes the timing and control logic 265 to load the row latches 215 with the first row number of the pixel array 205 and the column latches 235 with the first column number of the pixel array 205. The row latches 215 drive a row counter 220 which increments the row number on command from the timing and control logic 265 to allow each row of the pixel array to be selected in its turn or as needed. The output of the row counter 220 drives a row decoder 225, which generates a select row signal corresponding to a single row in the pixel array 205. The output of the row decoder 225 connects to the row drivers 230, which buffers and transmits a row select signal 380 to the pixel array 205 to select a single row of pixel data. The column latches 235 drive a column counter 240, which will increment the column number on command from the timing and control logic 265 to allow each column in a row to be selected in its turn or as needed. The output of the column counter 240 drives a column decoder 245, which generates a single column select signal 375 corresponding to a single column in the pixel array 205. The output of the column decoder 245 connects to the column drivers 250, which buffers and transmits a column select signal to the pixel array 205. The row and column select signals 380, 275 combine to select a single pixel from the pixel array 205. The pixel data for the selected pixel is moved to the pixel buffer 255 where it is stored before being read by a processor module 130 or a computer or computer logic that is external to the image capture device 120. In some embodiments, the pixel buffer 255 buffers data from multiple pixels so that multiple pixels are read with each external access to the image capture device. This reduces the bus time needed to read the entire pixel array 205. In some embodiments, the pixel buffer 255 conditions or transforms the pixel data from an analog form to a digital form.

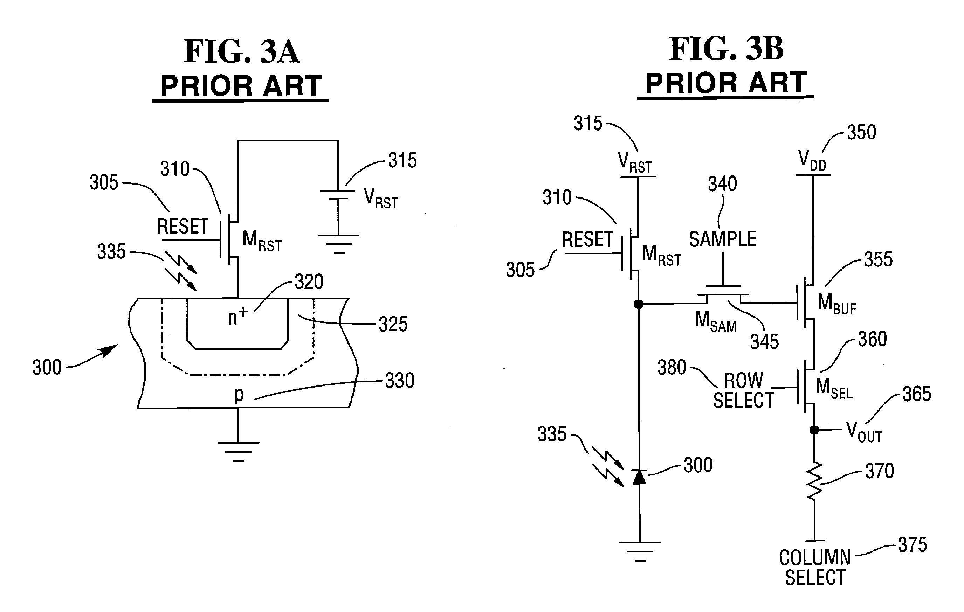

With reference to FIG. 3A, there is provided a high-level cross section diagram illustrative of a reversed biased PN junction photodiode 300. The photodiode 300 is configured to be a charge collection device where the charge on the photodiode 300 is proportional to the number of photons that strike the photodiode 300. The diagram depicts a portion of a silicon substrate containing photodiode 300, which is part of an array of photodiodes. Each photodiode, along with some additional circuitry, is defined as a pixel. When used as a charge collection device, the photodiode 300 is configured to operate in the reversed biased mode. In this mode of operation, the p region 330 of the photodiode is connected to ground while the n+ region 320 is connected to transistor MRST 310. A depletion region 325 separates the p region 330 from the n+ region 320 on the silicon substrate. Prior to starting the process of capturing photons, the n+ region 320 is charged or reset to a positive voltage VRST 315 by RESET signal 305, which turns on transistor MRST 310. Removing the RESET signal 305 turns off transistor MRST 310 which initiates the photon collection period. With the photodiode 300 held in a reverse bias condition, the n+ region 320 is electrically floating at the initial positive voltage of VRST 315. Electrons excited by photons 335 striking the photodiode 300 collect in the n+ region 320, reducing the initial voltage placed on this region; holes flow to the ground terminal attached to the p region 330. At some point, the photon collection period ends and the value of the remaining or final voltage in the n+ region 320 is read. The value of the final voltage is proportional to the number of photons that impinged on the photodiode 300 during the photon collection period. A final voltage that is near the initial VRST voltage 315 correlates to receiving few photons or having the photodiode 300 exposed to a very low light. A final voltage that is near zero volts correlates to receiving a larger number of photons or having the photodiode 300 exposed to an intense light. The more photons that impinge on the photodiode 300, the more the initial reset voltage VRST 315 is reduced.

This embodiment uses a photosensitive device, which in this case is a PN junction photodiode 300. In other embodiments, different photosensitive devices can be used, such as a photodiode with a PIN structure or a phototransistor.

Turning to FIG. 3B, there is provided a high level architectural schematic of a four transistor (4T) pixel. In this embodiment, a photosensitive device 300 and four transistors are used to implement each pixel. The p region 330 of the photodiode 300 is connected to ground and the n+ region 320 is connected to transistors MRST 310 and MSAM 345. Prior to starting the photon collection period (also known as capturing a pixel or image), RESET signal 305 is activated causing transistor MRST 310 to turn on which charges the n+ region 320 of the photodiode 300 to voltage VRST 315. The VRST 315 voltage is the starting or reference voltage for the photodiode 300. The photon collection period ends when SAMPLE signal 340 activates causing transistor MSAM 345 to capture the instantaneous voltage on the n+ region 320 of the photodiode 300. This is the final voltage and it is less than or equal to the reference voltage. Using the MSAM 345 transistor in this manner creates an electronic snapshot shutter. The SAMPLE signal 340 is connected to all pixels in the pixel array 205. Therefore, when the SAMPLE signal 340 is activated, all pixels in the pixel array 205 capture the final voltage of their respective pixel. The output of transistor MSAM 345 is sent to buffer transistor MBUF 355. Transistor MSEL 360 is used to select the output of the pixel for reading. A ROW SELECT signal 380 is placed on the gate of transistor MSEL 360 and a COLUMN SELECT signal 375 is placed on the drain of the transistor. The output (final voltage) is transferred to the pixel buffer 255 (FIG. 2), which generates and stores a digital value based on the difference between the starting voltage and the final voltage of the pixel cell. In some embodiments, the starting voltage can be outputted by selecting the output of the pixel prior to starting the photon collection period but after the photodiode 300 has been reset.

In other embodiments, a five or more transistor configuration is used to form the basic circuitry of a pixel. These embodiments may implement additional features for each pixel but their configurations will still work with the present invention.

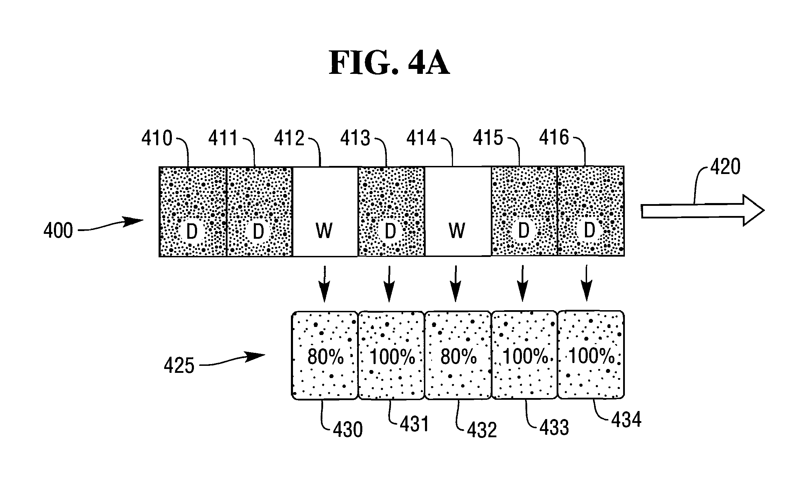

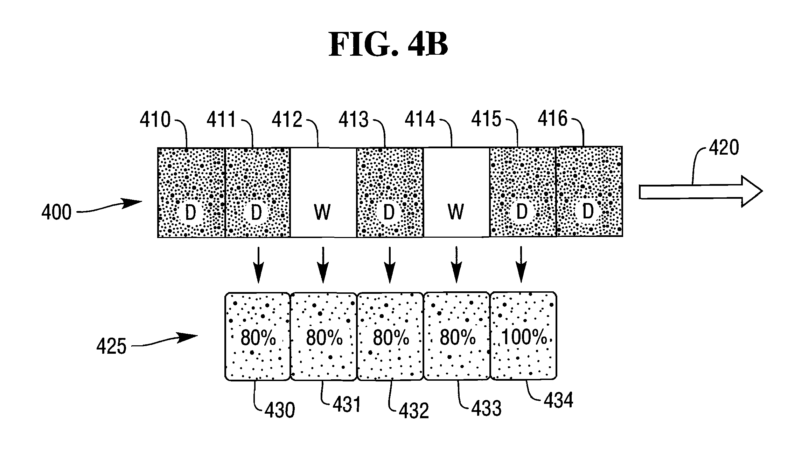

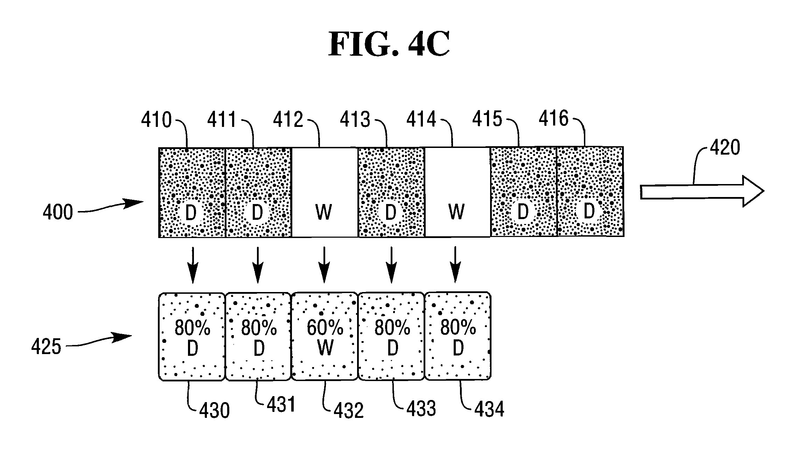

Moving to FIG. 4, there are provided three subfigures (4A, 4B and 4C) each depicting, at a different point in time, the image of a bar code segment 400 moving from left to right 420 across five pixels 425 that are a part of a row of pixels in the pixel array 205. The movement of the bar code segment 400, as depicted in the three figures, occurs during a single photon collection period, which simulates what happens when a bar code is moved passed an image scanner at high passby speeds. The number within each pixel (430-434) and shown on each subfigure represents the percent reduction in voltage from the reference voltage 315 for that pixel caused by photons that have impinged on the photodiode of the pixel, up to the point in time represented by the subfigure. The photon collection period is divided into three equal time periods. FIG. 4A represents the conditions of the photodiodes after one-third of the photon collection period has passed.
FIG. 4B represents the conditions of the photodiodes after two thirds of the time period has passed and FIG. 4C represents the conditions of the photodiodes at the end of the photon collection period.

With reference to FIG. 4A, the photon collection period starts with the image of the bar code segment 400 in this position. (Note: dark areas of the bar code segment represent no or low levels of photons and white areas represent high levels of photons.) Three dark areas 413, 415, 416 are positioned over the second, forth and fifth pixels 431, 433, 434. The photodiodes in these three pixels sustain no or minimal reduction in voltage because few photons impinge them. Two white areas 412, 414 are positioned over the first and third pixels 430, 432. The photodiodes in these two pixels receive photons and have their voltage reduced to 80% of the reference voltage.

Turning to FIG. 4B, the photon collection period continues and the image of the bar code segment 400 moves to a new position, as shown. Three dark areas 411, 413, 415 are now positioned over the first, third and fifth pixels 430, 432, 434. The voltage on the photodiodes of these pixels remains unchanged because few if any photons are impinging on the photodiode of each pixel. Two white areas 412, 414 are now positioned over the second and forth pixels 431, 433. The voltage on the photodiodes of these pixels where previously at 100% but now are reduced to 80% of the reference voltage due to the photons that have impinged on them.

Turning to FIG. 4C, the photon collection period continues and the image of the bar code segment has moved to a new position, as shown. Three dark areas 410, 411, 413 are now positioned over the first, second and forth pixels 430, 431, 433. The voltage on the photodiodes of these pixels remains unchanged because few if any photons are impinging them. Two white areas 412, 414 are now positioned over the third and fifth pixels 432, 434. The voltage on the photodiodes of these pixels were previously at 80% and 100% of the reference voltage respectively, but now are reduced to 60% and 80% respectively due to the photons that impinged on them.

The photon collection period ends with the image of the bar code segment in the position depicted in FIG. 4C. The first, second, forth and fifth pixels 430, 431, 433, 434 all have final photodiode voltages that are 80% of the reference voltage which represents a dark area. The letter "D" appears in each of these pixels. The third pixel 432 has a final photodiode voltage that is 60% of the reference voltage, which represents a white area. The letter "W" appears in this pixel. The five pixels 430, 431, 432, 433, 434 have the following final values when the voltages are converted to either dark or white space values: "DDWDD." However, the segment 400 of the bar code being presented to the pixels has the value "DDWDWDD." The five pixels 430, 431, 432, 433, 434 have failed to properly capture the segment 400 of the bar code that was presented. The failure to properly read a segment of the bar code leads to a failure to read the entire bar code requiring the bar code to be presented a second or more times for reading. This points out the deficiency of the prior art pixel circuitry as shown in FIG 3A and FIG. 3B.

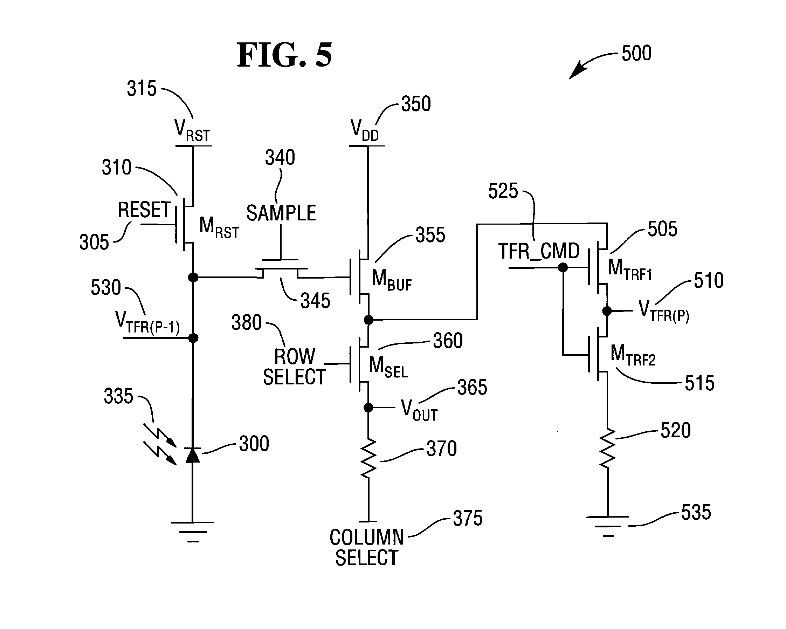

With reference to FIG. 5, there is provided a high level architectural schematic of a new pixel 500 design that uses a basic four transistor (4T) design with a pixel-to-pixel charge transfer feature. The charge transfer feature allows the instantaneous charge or voltage on a photodiode 300 of one pixel to be transferred to a photodiode 300 in a neighboring pixel. The charge transfer operation can be carried out one or more times during the photon collection period. Using this feature, as an image of an object moves across the pixel array 205, the charge integrated in each pixel associated with each segment of the image can be moved from pixel to pixel to follow the image as it moves across the pixel array 205. This causes the capture of a more accurate representation of the image and avoids the error shown in FIGs 4A, 4B, and 4C.

Continuing with FIG. 5, transistors MTRF1 505, MTRF2 515 and resistor 520 are added to the 4T pixel circuits to create and buffer transfer voltage VTFR(P) 510. Transfer voltage VTFR(P) 510 is equal to the instantaneous voltage on the photodiode 300, at the time it is sampled. The source connection on transistor MTRF2 515 is connected to ground 535 through resistor 520. This provides a path to ground to drain charge from neighboring photodiode if that is required for the neighboring photodiode to reach the proper voltage. The subscript "P" represents the relative location of the pixel in a row of pixels. The pixel to the left would be "P-1" (not shown). The pixel to the right would be "P+1" (not shown).

The process of transferring the instantaneous voltage of the photodiode in pixel "P" to the photodiode in pixel "P+1" starts by capturing the instantaneous voltage of the photodiode 300 in pixel "P". A snapshot of the voltage on the photodiode 300 is taken by activating and removing signal SAMPLE 340. Next, the TFR_CMD signal 525 is activated, which turns on transistors MTRF1 505 and MTRF2 515 creating and driving voltage VTFR(P) 510. VTFR(P) 510 is connected to the photodiode of its neighbor pixel "P+1" (not shown however the connection to pixel "P+1" is identical to the element 530 of pixel "P" which connects pixel "P-1" to "P") which receives the voltage signal. The received signal is then used to set the charge (voltage potential) on the photodiode of pixel "P+1". The charge on the photodiode moves up or down until it reaches the voltage VTFR(P) 510. When the TFR_CMD signal 525 is removed, the photodiode of pixel "P+1" continues to capture photons until the photo collection or integration period ends. The SAMPLE signal 340 and the TFR_CMD signal 525 are common to all pixels. The transfer of a photodiode voltage from one pixel to an adjacent pixel is referred to as a photodiode voltage transfer cycle. During each photodiode voltage transfer cycle, all pixels of the pixel array 205 are involved in the transfer. For example, as the voltage of pixel "P" is transferred to pixel "P+1," the voltage of pixel "P-1" is being transferred to "P".

In this embodiment, the charge transfer occurs from left to right in a row of pixels. So the instantaneous photodiode voltage of pixel "P-1" is transferred to photodiode 300 of pixel "P" as voltage VTFR(P-1) 530. The instantaneous photodiode 300 voltage VTFR(P) 510 of pixel "P" is transferred to the photodiode of pixel "P+1". Thus, the instantaneous photodiode voltage of each pixel in a row is simultaneously transferred to the photodiode of the adjacent pixel located to its right. The instantaneous photodiode voltage is likewise simultaneously transferred for all pixels in all rows of the pixel array 205. The first pixel of each row has no pixel to its left; therefore the voltage of each of these pixels is set to the reference voltage during the transfer cycle. The last pixel in each row has no pixel located to its right so while the transfer voltage is created for output, there is no pixel to receive the voltage.

In other embodiments, the instantaneous photodiode voltage transfer occurs from right to left on a row. In still other embodiments, the transfer is not between pixels on a row but between pixels in a column. The instantaneous photodiode voltage is transferred from a pixel in one row to a pixel in an adjacent row in the same column. In further embodiments, the image capture device can be programmed to transfer the instantaneous photodiode voltage from a pixel to any adjacent pixel in any direction. This allows for additional flexibility when trying to compensate for the movement of objects that pass by the image scanner.

In the below example, three photodiode voltage transfer cycles occur during a single photon collection period. The number of transfer cycles per photon collection period is programmable and can be set to zero so that the photon collection period operates similar to conventional image capture devices. When a determination is made that objects are or will passby the image capture device 120 at high speeds, the number of transfer cycles per photon collection period is set to a high number to mitigate the high passby speed of the objects. A low number of transfer cycles per photon collection period can be used when objects move slowly pass the image capture device 120. The Timing and Control Logic 265 controls the photodiode voltage transfer cycle and the photon collection period.

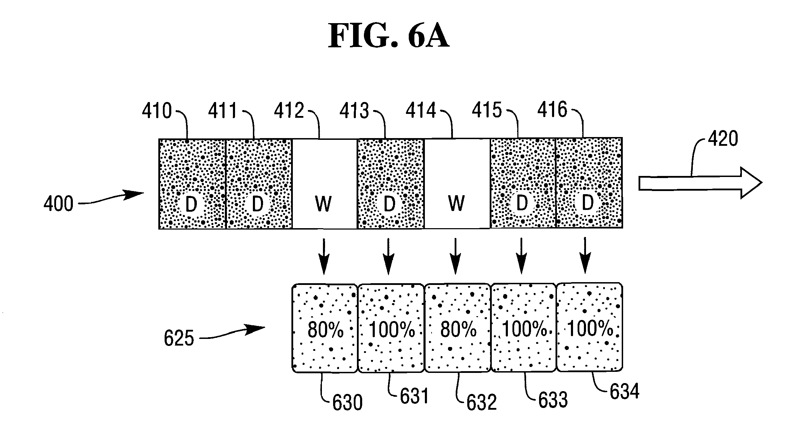

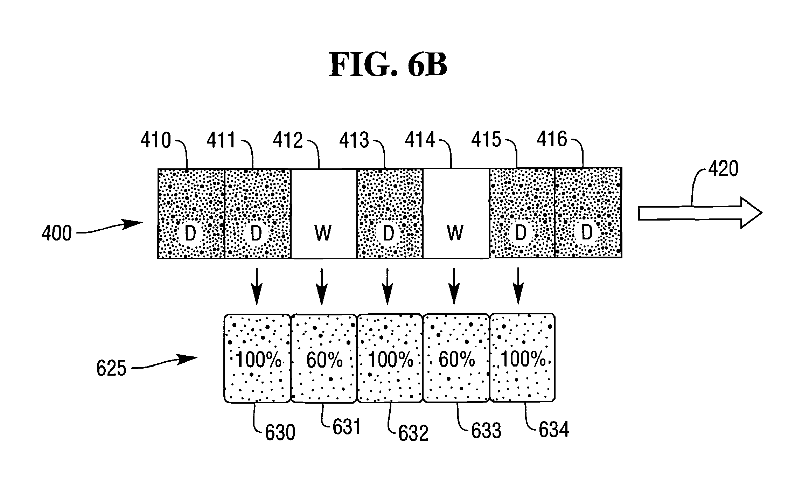

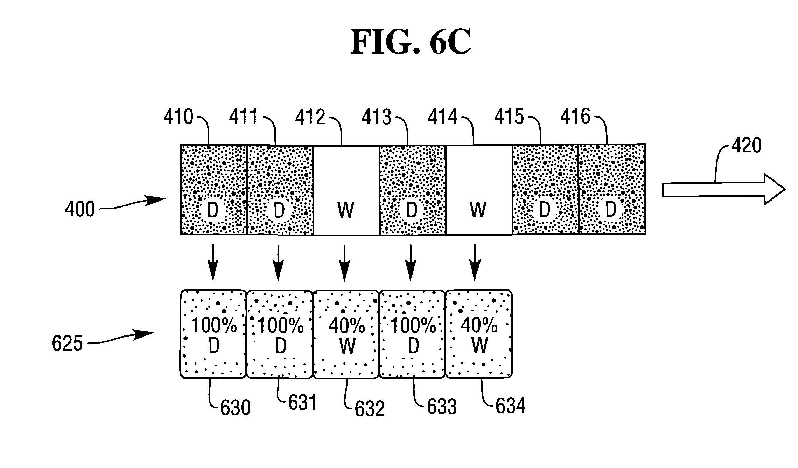

With respect to FIG. 6, there are provided three subfigures (6A, 6B and 6C) similar to the figures in FIG. 4 except the pixels represented in the figures FIG. 6 have the additional photodiode voltage transfer feature as depicted in FIG. 5. In this example, the image capture device 120 is programmed to have two photodiode voltage transfers cycles per photon collection period and the five pixels 625 transfer their photodiode voltage from left to right in the same row. The image of a bar code segment 400 is the same as in FIG. 4 and moves from left to right 420 across the five pixels 625 that are a part of a row of pixels in a pixel array 205. The movement of the bar code segment 400, as depicted in the three figures, occurs during a single photon collection period, which simulates what happens when a bar code is moved passed an image scanner at high passby speeds. The number within each pixel (630-634) shown on each subfigure represents the percent reduction in photodiode voltage, from the reference voltage 315 for that pixel, caused by photons that have impinged on the photodiode of the pixel up to the point in time represented by the figure. The photon collection period is divided into three equal time periods. FIG. 6A represents the conditions on the photodiode after one-third of the photon collection period. FIG. 6B represents the conditions on the photodiode after two thirds of the time period and FIG. 6C represents the conditions on the photodiode at the end of the photon collection period. A photodiode voltage transfer cycle occurs after the one-third and two-thirds points in the photon collection period. The values shown in FIG. 6A and 6B are the photodiode values just prior to the transfer cycle and represent the photodiode values transferred to the next pixel.

With reference to FIG. 6A, the photon collection period starts with the image of the bar code segment in this position. (Note: dark areas of the bar code segment represent no or low levels of photons and white areas represent high levels of photons.) Three dark areas 413, 415, 416 are positioned over the second, forth and fifth pixels 631, 633, 634. The photodiodes of these three pixels sustain no or minimal reduction in voltage because few photons impinge on them. Two white areas 412, 414 are positioned over the first and third pixels 630,632. The photodiodes of these two pixels receive photons and have their photodiode voltage reduced to 80% of the reference voltage.

After the snapshot of FIG. 6A and before the start of the second portion of the photon collection period, a photodiode voltage transfer cycle occurs and the instantaneous voltage on each photodiode of each pixel is transferred or shifted to the photodiode of the pixel to the right on the same row. Once the voltage has been transferred, the photon collection continues until the two-thirds point in the photon collection period is reached. The image of the bar code segment moves to a new position. The image position and the values of the photodiodes of the pixels at this point in time are shown in FIG. 6B. The photodiode voltage of each pixel has been shifted to the right by one and the photodiode voltage of the first pixel was reset to the reference voltage 315. Three dark areas 411, 413, 415 are now positioned over the first, third and fifth pixels 630, 632, 634. The photodiode voltage of these pixels remains little changed because few if any photons have impinged on these pixels during this period or on the prior pixels during the first time period. Two white areas 412, 414 are now positioned over the second and fourth pixels 631, 633. After the voltage transfer cycle, the starting photodiode voltage of the second and forth pixels 631, 633 was set to 80% and during the second time portion of the photon collection period, the voltage on the two pixels was further reduced to 60% due to the photons that impinge on the photodiodes of these pixels.

After the snapshot of FIG. 6B and before the start of the third and last portion of the photon collection period, a photodiode voltage transfer cycle occurs and the instantaneous voltage on each photodiode of each pixel is transferred or shifted to the photodiode of the pixel to the right. Once the transfer cycle is complete, the photon collection continues until the end of the collection period is reached. The image of the bar code segment also moves to a new position. The image position and the final photodiode voltage of the pixels at this point in time are shown in FIG. 6C. At the start of the last part of the collection period, the value of each pixel was shifted to the right by one and the photodiode voltage of the first pixel was again reset to the reference voltage 315. In FIG. 6C, three dark areas 410, 411, 413 are now positioned over the first, second and fourth pixels 630, 631, 633. The photodiode voltage of these pixels remains unchanged because few if any photons have impinged on these pixels or on the prior pixels during either of the first two time periods. Two white areas 412, 414 are now positioned over the third and fifth pixels 632, 634. The photodiode voltage of these pixels after the second voltage transfer cycle was set to 60% and have been further reduced to 40% due to the photons that impinged on the photodiodes of each pixel during the last portion of the photon collection period.

The photon collection period ends with the photodiode values and the image of the bar code segment in the position depicted in FIG. 6C. The first, second and fourth pixels 630, 631, 633 all have final photodiode voltages that are 100% of the reference voltage which represents a dark area. The letter "D" appears in each of these pixels. The third and fifth pixels 632, 634 have a final photodiode voltage that is 40% of the reference voltage, which represents a white area. The letter "W" appears in each pixel. The five pixels 630, 631, 632, 633, 634 have the following final values when converted to either dark or white space values: "DDWDW". This matches the last five segments of the bar code image that was moved across the pixels, which are "DDWDW". This would result in a correct read of the bar code. Without the voltage transfer cycles, the image capture device failed to properly read the bar code as illustrated in FIG. 4. In addition to properly reading the bar code, the contrast ratio was also improved. In this example, the dark value was at or near 100% of the reference voltage 315 and the white value was at or near 40% of the reference voltage. This method created a difference of 60% of the reference voltage between white and dark areas. In the previous example where no voltage transfer was performed, the dark value was 80% of the reference voltage 315 and the white value was 60% of the reference voltage. This method created a difference of only 20% of the reference voltage 315 making it harder to distinguish between the dark and light areas thus lowering the probability of properly reading the bar code.

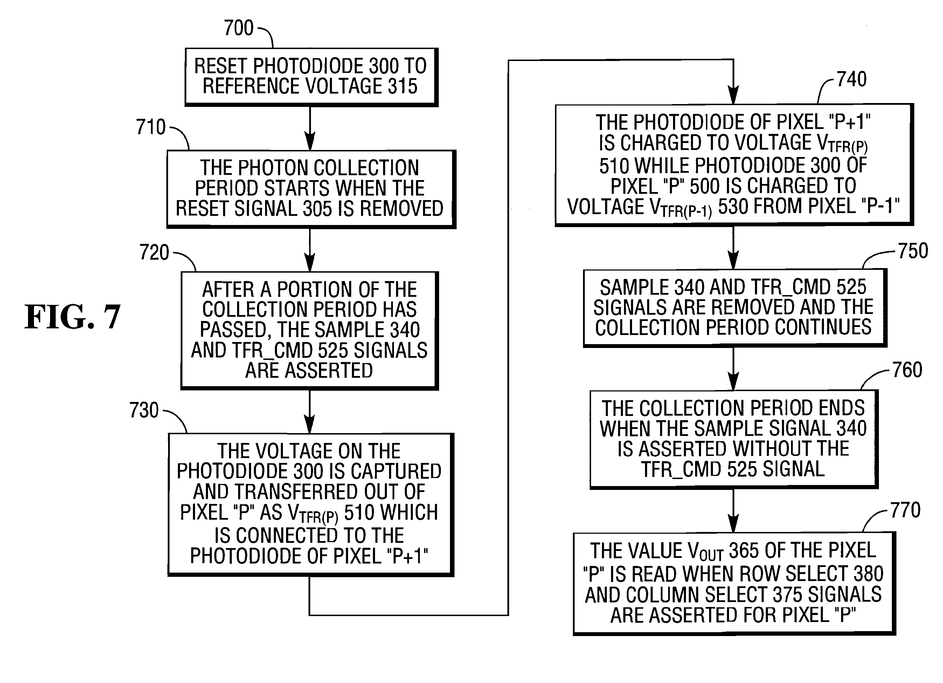

FIG. 7 is a high level flow diagram illustrating the movement of a partially integrated charge or voltage value from one pixel to an adjacent pixel where the integration of the charge continues based on the number of photons received. The process is called the photodiode voltage transfer cycle or transfer cycle for short. This process occurs simultaneously in all pixels within the pixel array 205 so that the instantaneous charge value of each pixel is shifted to an adjacent pixel at the same time throughout the pixel array 205. This diagram shows what happens within pixel "P" and how pixel "P" interacts with adjacent pixels. A similar process occurs in every pixel during the transfer cycle.

Prior to the beginning of the photon collection period (also known as the charge integration period), the charge on the photodiode 300 is reset to a reference voltage 315 by the application of RESET signal 305(step 700). When the RESET signal 305 is removed, the charge on the photodiode 300 floats because the PN junction of the photodiode 300 is reversed biased. The photon collection period starts once the charge on the photodiode 300 is allowed to float (step 710). At some point during the photon collection period, the SAMPLE 340 and TFR_CMD 525 signals are asserted to all pixels in the pixel array 205 (step 720). The instantaneous charge on the photodiode 300 of pixel "P" is captured as a voltage VTFR(P) 510 when the SAMPLE 340 signal is asserted and removed. This represents the integration of charge from photons that have impinged on the photodiode 300 from the start of the photon collection period to this point in the collection period. A signal with voltage VTFR(P) 510 is then driven externally to adjacent pixel "P+1" when the TFR_CMD 525 signal is asserted (step 730). Pixel "P+1" receives the signal and charges its photodiode to voltage VTFR(P) 510. At the same time, pixel "P" receives a signal VTFR(P-1) 530 from pixel "P-1" that represents the charge on the photodiode of pixel "P-1". Pixel "P" takes the received signal and charges its photodiode 300 to voltage VTFR(P-1) 530 (step 740). Signal TFR_CMD 525 is removed from all pixels in the pixel array 205 and the photon collection period continues (step 750). At some point in time, the TFR_CMD 525 signal is asserted to all pixels in the pixel array 205. This causes the photon collection period to end for all pixels and captures the final voltage on the photodiode of each pixel (step 760). The final voltage is then driving out of pixel "P" as voltage Vout when the ROW SELECT 380 and COLUMN SELECT 375 signals are asserted for pixel "P" (770).

While the invention is disclosed in the context of an image capture device used to read optical codes, it will be recognized that a wide variety of implementations may be employed by a person of ordinary skill in the art consistent with the above discussion and the claims, which follow below. In addition, the image capture device 120 can be used in other functions not associated with bar code recognition.

## Claims

1. A pixel (500) in an image capture device (120), the pixel (500) comprising:
a photosensitive device (300) that integrates a charge proportional to the number of photons striking the photosensitive device (300) during an integration period;
a transferring device that detects the instantaneous integrated charge in the photosensitive device (300) during the integration period and transfers a signal of equal charge to a second pixel in response to a transfer control signal; and
a receiving device that receives a signal from a third pixel and sets the instantaneous integrated charge in the photosensitive device to the level of the received signal.

2. The pixel of claim 1, where the second and third pixels are adjacent pixels.

3. The pixel of claim 1 or 2, where the second and third pixels are on a row together with the pixel.

4. The pixel of claim 1 or 2, where the second and third pixels are on a column together with the pixel.

5. The pixel of any preceding claim, wherein the photosensitive device (300) is a photodiode.

6. The pixel of any of claims 1 to 5, wherein the photosensitive device (300) is a phototransistor.

7. The pixel of any preceding claim, where the image capture device (120) is a CMOS image sensor.

8. The pixel of any of claims 1 to 7, wherein the image capture device (120) is a charged coupled device (CCD) image sensor.

9. A method for integrating a charge in a pixel of an image capture device, the method comprising:
setting the charge in a photosensitive device in the pixel to a reference voltage;
integrating the charge over an integration period where the change in the charge voltage is proportional to the number of photons striking the photosensitive device during the integration period;
transferring a value of the instantaneous integrated charge prior to the end of the integration period in response to a transfer control signal; and
receiving an integrated charge value and setting the charge in the photosensitive device to the received integrated charge value and continuing the integration of the charge.

10. The method of claim 9 wherein the steps of transferring a value and receiving an integrated charge value are repeated one or more times during the integration period.

11. The method of claim 9 or 10, further comprising determining a final value of the integrated charge at the end of the integration period.

12. The method of any of claims 9 to 11, further comprising transferring the final value to an external device for conditioning.

13. A method of forming a pixel cell of an image capture device, the method comprising:
forming a photosensitive device in the pixel cell that integrates a charge which is proportional to the number of photons striking the photosensitive device;
forming at least one transistor in the pixel cell responsive to drive a first signal externally to an adjacent pixel in response to a transfer control signal where the first signal represents the instantaneous charge on the photosensitive device; and
forming a device that receives a second signal from an adjacent pixel and sets the charge of the photosensitive device to the value of the second signal where the second signal represents the instantaneous charge on a photosensitive device in the adjacent pixel.

14. The method of claim 13, wherein the photosensitive device (300) is a photodiode.

15. The method of claim 13, wherein the photosensitive device (300) is a phototransistor.
